(19) **Europäisches Patentamt / European Patent Office / Office européen des brevets**

(11) **EP 2 469 757 A1**

(12) **EUROPEAN PATENT APPLICATION**

(43) Date of publication:
**27.06.2012 Bulletin 2012/26**

(51) Int Cl.:
***H04L 12/24*** (2006.01)

(21) Application number: **10252223.2**

(22) Date of filing: **24.12.2010**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **British Telecommunications Public Limited Company
London EC1A 7AJ (GB)**

</td><td>

(72) Inventor: **The designation of the inventor has not yet been filed**

(74) Representative: **Lidbetter, Timothy Guy Edwin et al
BT Group Legal
Intellectual Property Department
PP C5A, BT Centre
81 Newgate Street
London
EC1A 7AJ (GB)**

</td></tr>
</table>

(54) **Communications network management**

(57) The present invention provides a communications network comprising a plurality of routers and a plurality of communications links which interconnect the routers and a global network management module. The global network management module is in communication with a number of diverse information sources, such as television listings, social networking sites, user preferences, historical data relating to the accessing of content, etc. such that the global network management module can make a prediction as to the likelihood that a particular network traffic event will occur and the demands that such a traffic event will place on the network. If the global network management module decides that the traffic event will occur then it will pre-configure the communications network such that the traffic generated by the event can be carried across the network within pre-defined quality thresholds and without unnecessarily effecting other traffic being carried on the network.

Figure 3

**Description**

The present invention relates to the operation of communications networks and in particular to the autonomic operation of communications networks.

It will be understood that there are a number of different approaches to network capacity management for communications networks. If the network is yet to be built, then over-provisioning is the easiest method. Network capacity can be determined on the basis of network demands forecasts and modelling, with the expectation that the demand placed upon the network does not exceed the provisioned limit. The process of putting in more capacity once this limit has been exceeded is laborious and might even require engineers to lay more cable and connect them back into the network. Evidently, this method is very static.

Alternatively, once a network becomes overloaded, services undergo admission control at the edge of a congested network based on current availability in the network to accommodate the incoming new flow. This technique is as old as the Public Switched Telephone Network (PSTN) and has been implemented using logical units such as Bandwidth Brokers and protocols such as RSVP (within the Integrated Services framework). Traditional call admission only looks at allowing a service/flow access into the network. It does not address the problem of gradual underperformance of a service while being assigned to a specific sequence of resources. This becomes increasingly important when the number of services delivered on the IP networks and the variety in the Quality of Service guarantees they require expands with the introduction of TV and gaming content from numerous content providers.

According to a first aspect of the present invention there is provided a communications network comprising a plurality of routers; a plurality of communications links, the communications links interconnecting each of the plurality of routers to one or more other routers; a network management database, the network management database storing operational data regarding each of the plurality of routers; and a global network management module, the global network management module being in communication with the network management database and with a plurality of information sources wherein, in operation, the global network management module: a) analyses information received from one or more of the plurality of information sources; b) determines the probability that a traffic event will occur, based on the information received in step a); c) reconfigures the communications network if it decides that the traffic event will occur, the network reconfiguration occurring before the occurrence of the traffic event.

According to a second aspect of the present invention there is provided a method of operating a communications network, wherein the communications network comprises: a plurality of routers; a plurality of communications links, the communications links interconnecting each of the plurality of routers to one or more other routers; a network management database, the network management database storing operational data regarding each of the plurality of routers; and a global network management module, the global network management module being in communication with the network management database and with a plurality of information sources, the method comprising the steps of i) the global network management module analysing information received from one or more of the plurality of information sources; ii) the global network management determining the probability that a traffic event will occur, based on the information received in step i); and iii) the global network management module reconfiguring the communications network if it decides that the traffic event will occur, the network reconfiguration occurring before the occurrence of the traffic event.

According to a third aspect of the present invention there is provided a data carrier device comprising computer executable code for performing a method as described above.

Embodiments of the present invention will now be described, by way of example only, with reference to the accompanying drawings in which:

Figure 1 shows a schematic depiction of a communications network which comprises a plurality of different network segments;
Figure 2 shows; a schematic depiction of a network segment;
Figure 3 shows a schematic depiction of the global management module; and
Figure 4 shows a flowchart which provides a graphical depiction of a method according to the present invention.

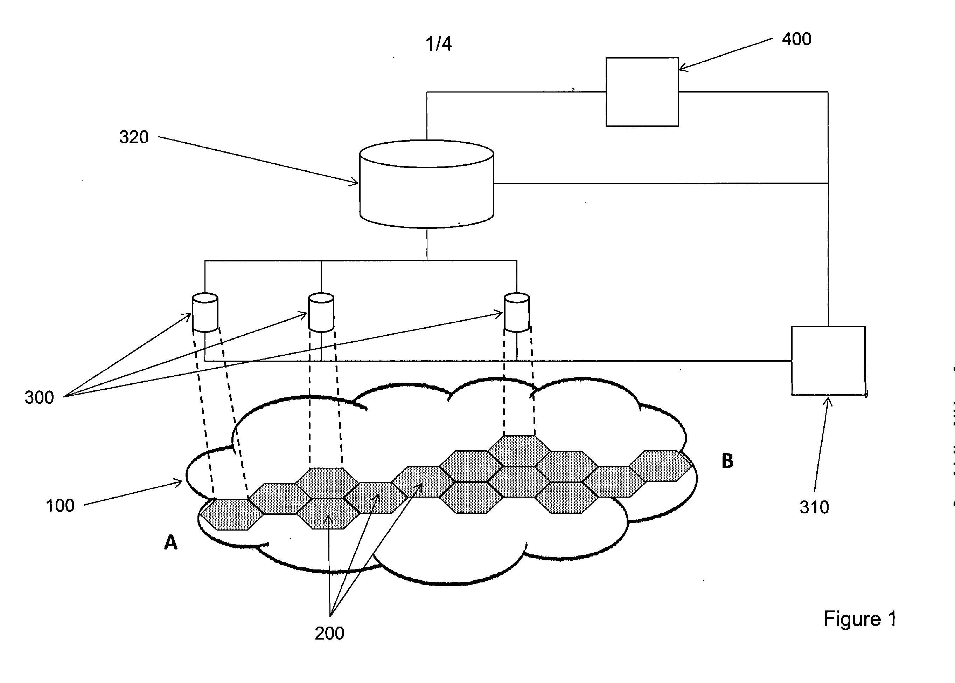

Figure 1 shows a schematic depiction of a communications network 100. A path across the communications network 100, for example between points A and B, can be considered to be comprised of a plurality of different network segments 200. Each of the plurality of network segments 200 is associated with a respective network segment management module 300. For the sake of clarity Figure 1 shows only a subset of the plurality of network segments which lie on or near to an approximate route from point A to point B across the network. It will be understood that the network can be considered to comprise more network segments than are shown in Figure 1. Furthermore, only some of the plurality of network segment management modules 300 are shown in Figure 1. Figure 1 further shows a supervisory network management module 320 which is in communication with each of the plurality of network segment management modules 300. A network management database 310 is in communication with both the supervisory network management module and the plurality of network segment management modules. A global network management module 400 is also in direct communication with the supervisory network management module 320 and the network management database 310.

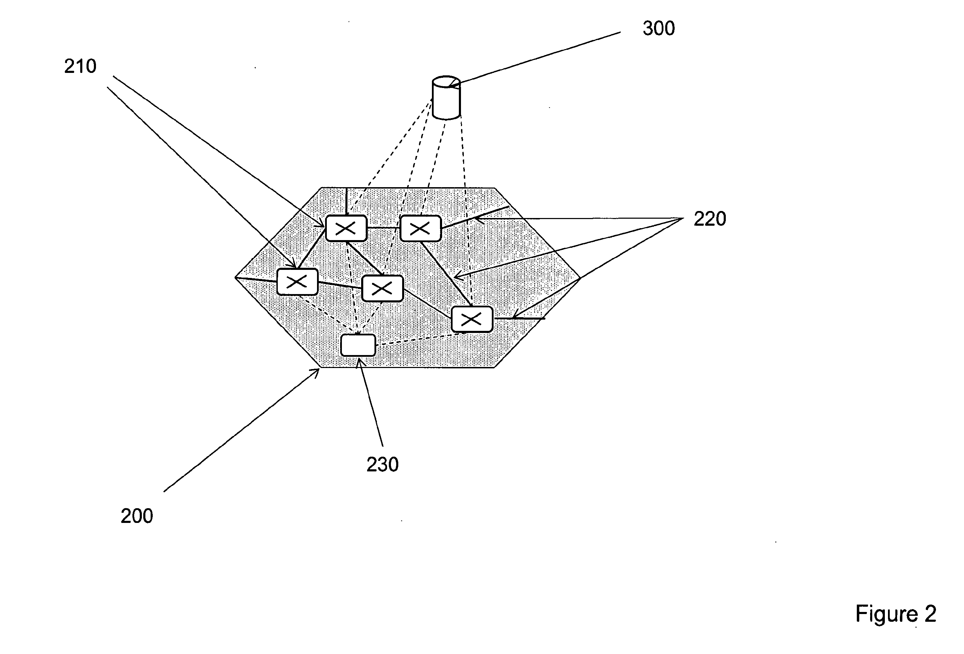

Figure 2 shows a schematic depiction of one of the plurality of network segments 200 which comprises one or more network routers 210 and one or more communications links 220 . The communications links 220 interconnect the network routers 210 within the network segment 200 and also provide connections outside the network segment, for example to network routers within other network segments or to destinations at the edge of the network, for example points A or B. These destinations at the edge of the network may comprise a node that is generating or receiving data or a gateway to further networks. A network segment may also comprise other elements such as switches, bridges, etc.

Referring to Figure 1, consider a flow of traffic from Point A to Point B when the network is only lightly loaded. While standard Internet Protocols provide no guarantee that the end-to-end pathway of two consecutive packets will be the same, a change is only likely to occur if the state of a link or router changes or if a link is being overloaded such that the QoS parameters are exceeding acceptable limits. Therefore, assuming that the network begins in a stable condition then it follows that it is reasonable to assume that at least some consecutive packets will follow the same pathway across the network between Points A and B. As can be seen from Figure 1, the communications network 100 is divided into a number of network segments. A route between endpoints A and B is likely to pass through a set of the shaded segments that are shown in Figure 1. It is possible to define a set of quality of service (QoS) parameters and associated parameter limits that are valid for the end-to-end path across the network from A to B. For example the set of QoS parameters, P, may be defined as:

$$P = \{\text{delay, jitter, loss}\} \qquad\qquad [1]$$

.

but it will be understood that other parameters may be used in addition, or in the alternative. If the values of these QoS parameters exceed predetermined values which represent acceptable QoS boundaries then a SLA (Service Level Agreement) may be breached. In order for the flow of data through each of the network segments to be managed it is necessary to provide segment-specific QoS parameters to the management modules 300 associated with each of the segments in the route. These parameters, $P_a$, represent the limits to the various QoS parameters that apply to the transmission of data for the local segment a for that service session. This can be expressed as "per router or per link, this service can tolerate x seconds of delay, y seconds of loss and z seconds of jitter given that the service flow traverses a range of m - n routers in total from source to destination".

These QoS parameters can be defined centrally, obtained using operator expertise, or derived periodically by the segment management module on a per flow or per service category basis depending on the proportion of links/ routers that the service traverses in that segment compared to the end-to-end distance. The overall QoS thresholds for each segment can be derived from this ratio, based on the size of the segment in comparison to the end-to-end chain.

Regardless of the manner in which this information is obtained, the QoS parameters are either communicated directly to each of the segment management modules or are held in a separate network management database 305. Each of the segment management modules are in communication with the network management database 305 such the network management database can be queried by a segment management module and the associated segment QoS parameters are returned to the management module. As a result, each of the segment management modules will have, for a given service flowing through the network, an array $P_a$ that states the maximum allowable QoS parameters for that particular segment in order that the overall QoS satisfies the SLA.

In order to be able to be able to monitor these parameters in real time it is necessary to translate them into one or more parameters that are easily accessible from the routers 210 that are present in the different network segments. For example, it is possible to access a wide range of local router parameters from the Management Information Base (MIB). These parameters can include, without limitation, ingress/egress buffer availability, router response time, router on/off status, link capacity, rate of ingress and egress traffic flows (the ratios of these flows to buffer occupancy as well as the trend of this over time), and packets discarded on the ingress/egress due to various faults (e.g. buffer overflow, software errors).

Put more formally, it is necessary to express $P_a$ in the generic form

$$P_a = f(\text{d, e, f, g}) \qquad\qquad [2]$$

and to determine the function $f$ and the parameters d, e, f & g which are equivalent to $P_a$. It is known to perform such translations using either linear regression or if necessary a non-linear regression technique such as, for example, a multi-layer perceptron. It will be understood that linear regression is easier to implement and should provide sufficient accuracy. It should also be understood that if suitable router parameters can be found from another source, such as from an aggregator entity (as described below) or another protocol or set of flooded LSAs that have already been implemented to collect such network performance data, then it is possible to use this alternative source of parameters to determine the equivalent expression of $P_a$. Similarly, an alternative method of translating the router parameters in order to determine $P_a$ could be used.

Thus it is possible to monitor a selected subset of parameters that directly reflect the operational performance of each of the routers in the network segments of interest and use this information in order to determine the value of $P_a$ in real time. Once the values of $P_a$ are determined for each network segment then it is possible to use this data to predict when the performance of the network is likely to lead to the SLA being breached, either when considering one or more segments in the network, or an end-to-end network path. The output required from the network as a result of this step is a "near real-time progress report" of the performance of every individual, or class of, service flow in the network.

The actual values of the required router parameters may be obtained by each of the segment management modules periodically polling each of the routers that are comprised within their respective network segments. Alternatively, each of the routers may 'push' the required router data to the segment management modules on a periodic basis or as and when parameter values change. Alternatively, one could implement an aggregator entity 210, which performs the mapping function $f$ and passes the instantaneous QoS matrix it calculates from all its router sources to the segment management module, which then makes predictions based on this QoS data.

Once the performance data has been collected then it will be understood that predictions of potential underperformance can be made in a number of different known ways. One of the simplest methods is to use trend analysis. For example, if the buffer occupancy has increased over the past n periods, then it is likely that delays in the router will increase and therefore exceed the acceptable local threshold after the next m periods. Alternatively, if the number of packets discarded from a UDP voice call flow increases over n periods, then it is likely that the loss of packets will exceed acceptable thresholds after m periods if the same trend continues. In addition to this, it is possible to use association rule mining that learns from historical data. This could lead to rules such as

"if parameters {d, e, f, g} maintain values {$d_a$, $e_a$, $f_a$, $g_a$}, then the QoS parameters $P_a$ are likely to be exceeded within the next m time periods".

Such rules can then be used in real-time by the segment management modules. Association rule mining is a known technique and there are several known learning methods (for example, decision and regression trees or neural networks, see T Mitchell, "Machine Learning", McGraw-Hill Science/Engineering/Math, 1st edition, 1997) that could be used to make these predictions and to map these predictions to specific parameter values in the form {$d_a$, $e_a$, $f_a$, $g_a$}. The segment management modules compares the real-time parameter inputs it receives from its routers to the criteria required by these predictions. This can be done by comparing the rules stored in a database to the incoming parameters and automatically triggering a subsequent action when a rule is fulfilled. It will be understood that this can be done according to class of service or on a per flow basis. This distinction might be necessitated by various services from different providers requiring different SLAs and QoS parameters, therefore leading to different rules for each class of service and/or flow.

If such a rule is triggered then it will be understood that the consequent action to be performed could take one or more of a large range of actions in order to prevent network congestion building up at one or more particular routers on along one or more communications links within a given network segment. It is thought that one appropriate response is to spread data across the network segment, based upon historical knowledge of how much data that other currently available communications links in that segment can tolerate whilst still being able to sustain the locally assigned SLA. It will be understood that all of the traffic being transmitted over that link may be re-distributed, or alternatively just a fraction of the data can be re-distributed. A further advantage of such a re-assignment of some or all of the traffic from an underperforming link is that the reduction of the load on that link should provide an opportunity for the performance of that link to recover and to minimise the effect of its underperformance until a recovery has been effected.

For example, if there are two possible routes to a destination and the primary route is reaching capacity, such that it is likely to lead to congestion, then sending a certain percentage of traffic via the secondary route, even if it is not be able to take 100% of the primary route's traffic, is likely to be better than keeping the primary route fully occupied.

This re-routing of some or all of the data can be achieved either using link information from IP routing tables and/or using other rules learnt from historical performance of the communications links in the network segment. In one such method, the segment management module will poll the router that is upstream of the most underperforming routers in order to learn about the next best hop to replace the suffering link. It is recommended to poll the router that precedes the suffering link as it is likely that this has the most up-to-date information about its next best hops. Should the polling cause too much overload on the router itself, one could poll any router nearby (not necessarily only upstream) if a link-state protocol such as OSPF is being implemented at the IP layer. In the case of distance vector protocols such as BGP or RIP, it is necessary to poll the router preceding the suffering link because no other router will actually have the required next best hop information.

The next best hop may be within the same network segment or it may be in a different network segment. If it is in the same network segment, then a rule repository about the prior performance of the next hop link can be consulted to decide how much of the data can be offloaded onto the new link, given the current occupancy and expected performance of the proposed next hop. Alternatively, the data distribution can be done randomly across all the links that could be used to carry that particular service. In a further alternative, the traffic may be distributed evenly across some or all of the available links, or the traffic may be distributed in a manner which is proportional to the available capacity on these links.

If such a rule regarding the prior performance of new next hop does not exist in the rules repository, then the decision as to whether to re-route traffic over this hop will be made based only on the current loading of the next hop and the services that are being transported over it.

Once the decision to re-route traffic has been made then it will be logged by the network segment management module, so that the effect of the re-routing can be stored and this historical performance data may then be used when making subsequent decisions regarding the re-routing of traffic.

In the case where the next hop is located within the same network segment as the suffering link, once it has been decided how much data to re-route, and the next hop(s) over which it is to be re-routed, then it is necessary to implement a mechanism for that distributes the re-routed traffic onto the new next hop(s). For some cases, it may be appropriate to decided to offload all the data from an overloaded link if it is predicated that the link will fail entirely within a predicted timeframe (see, for example, the Applicant's co-pending application EP10250540). This may be achieved, for example by increasing the link cost, thus releasing the link entirely from the network.

If the management of the network 100 is based solely on decisions that are made within the individual segments of the networks, then there is a possibility that inefficient or inappropriate routing decisions may be taken, as each of the segment management modules does not have any information regarding the end-to-end QoS for the service flow over a large network is large. This can lead to the following situations occurring:

- a segment that is under stress could be throttled for to meet local QoS targets when the end-to-end QoS measures are well below their respective thresholds;

- a handover process might be triggered when not necessary, resulting in extensive overhead in setting up the data re-routing as well as reporting the change to other network management systems;

- as the size of the monitored network increases, the iterative handover process requires a prediction period that is longer than might be necessary because the first alternative route might not be suitable, and several alternatives might need to be investigated before an acceptable alternative is found

- a network segment with acceptable performance may be forced to deteriorate the service provided in order to avoid a detrimental effect elsewhere within the network.

In the network management system discussed above, if it is not possible for a segment management module to fix a local fault, possibly within a defined time period, then this can lead to an alarm being issued. The present invention provides a network management system which should significantly decrease the number of such alarms that are issued.

Figure 1 further shows a supervisory network management module 320 which is in communication with each of the plurality of network segment management modules 300. A network management database 310 is in communication with both the supervisory network management module and the plurality of network segment management modules. The supervisory network management module can function in two different methods. Firstly, if the segment management modules make local decisions to optimise each individual part of the network, but only once service degradation has occurred, then the supervisory module can add an overlay to that those local network management modules. Secondly, the supervisory module can add a overlay to the proactive segment management modules discussed above with reference to Figure 1. In the first case, the processing and responses of the supervisory module have to be quick enough that it can react to network speeds so that data is not lost while the processing is taking place. For both methods of operation, the purpose of the supervisory module is to reduce the number of handovers made between the local entities by preventing unnecessary handovers from being triggered.

In operation, the supervisor module has access to real time performance data from each of the network elements in each of the network segments which comprise the communications network 100, and these are expressed as real-time QoS parameters P. The supervisory module will receive periodic updates for these QoS parameters P for each locally managed network segment, for a given class of service, thereby enabling the supervisory module to make predictions about the future health of a given network segment. These predictions can be made using a number of different methods, which may include knowledge held by a network operator regarding prior experience about a network segment. Another automated technique of making this prediction is to use an association rule miner or a time series analysis for each QoS parameter, as described above with regard to the segment management modules.

If one of the network segments determines that a communications link within that segment will soon become overloaded, then this change will be communicated to the supervisory module. If that network segment is able to re-route the data solely within the network segment then there is no need to invoke the functionality of the supervisory module. However, if it is not possible to re-route the data within that segment, then the network segment management module will send a message to the supervisory module regarding the data which it is not able to re-route..

The supervisory module has an overview of the entire end-to-end route across the network, the QoS thresholds for the end-to-end route and the QoS thresholds assigned for each of the different network segments that the end-to-end route passes through. Thus, typically, a segment management module will send a re-routing request to the supervisory module because the segment is unable to continue to transmit the data without breaching one or more of the QoS thresholds associated with that segment. If the supervisory module is able to determine that a number of the other segments in the end-to-end path are operating sufficiently below their respective thresholds then it may permit the network segment that sent the re-routing request to carry on transmitting data via the original route.

As is discussed above, the QoS threshold parameters, $P_a$, for each of the segment management modules can be stored within the network management database 310 and these parameters can be accessed by the supervisory module. If there is a small number of overloaded segments within a network route then it may be possible to vary these threshold parameters, $P_a$, in order to decrease the number of handovers and thus provide more effective network usage. When the supervisory module receives a request from a segment management module to initiate a handover, it will check the real-time performance of each of the network segments in the end-to-end network route to determine which segments, if any, are performing better than expected and are predicted to perform better than expected. If such segments are found then it is possible to adjust the QoS parameters for the overloaded segment, for example by a margin of $\delta$, so that the QoS parameters are defined by:

$$P_a = \{x_a + \delta_a, \, y_a + \delta_b, \, z_a + \delta_c\} \qquad [3]$$

The QoS parameters of the well-performing segment will then be decreased correspondingly, such that they are defined by:

$$P_a = \{x_a - \delta_a, \, y_a - \delta_b, \, z_a - \delta_c\} \qquad [4]$$

where $\delta_a$, $\delta_b$ and $\delta_c$ are the respective margins for each QoS parameter. It will be understood that if the adjustment may involve one segment having its parameters increased by a particular margin and another segment having a corresponding decrease in its QoS parameters. In some cases it may be necessary to decrease the QoS parameters of a number of network segments in order to be able to increase the QoS parameters of one network segment (or a small number of segments). In any case, the total of the QoS parameters across the end-to-end network route must remain constant, in order that pre-agreed service level agreements can be met. If not all of the QoS parameters for a given segment (or segments) are predicted to exceed their thresholds then it is not necessary to vary the margin for those parameters, for example if a segment is expected to underperform with respect to the delay threshold but is predicted to have an acceptable jitter performance then only the threshold for delay will be increased whilst the jitter threshold will remain unchanged. The variations in margin may be determined on the basis of a predetermined constant value, a percentage of the initial threshold value or may be determined by an algorithm that weights the margin value in accordance with the expected performance of a network segment or other factors. Once the QoS parameter values have been determined for the overloaded segment(s) then they will be updated in the network management database and will be transmitted to the relevant network segment management modules. These segment management modules will then apply the new QoS parameter values and thus if it is no longer necessary to re-route the data then the re-routing will not occur.

In the event that none of the network segments is performing better than was predicted then it will not be possible for the QoS threshold of an overloaded segment to be increased in such a case. In such an event, the supervisory module may return to a segment management module which has reported that it needs to re-route data to another segment a list of adjacent network segments which are potential candidates to receive re-routed data. The supervisory module may remove unsuitable network segments, for example because they lack the security or encryption required by the data stream that is to be re-routed. By providing a restricted list of segments for re-routing then the effort required of the segment management module to re-route the data can be reduced.

Note that if a segment that is expected to perform better actually does not live up to this expectation, this will be seen when it requests for permission to initiate handover at a later stage because it has not been able to meet its higher standards. This might result in an oscillation effect but this can be learnt over time and certain segments can be marked as being unable to perform as well as expected (i.e. rule_miner_2) and therefore lesser data can be pushed through to them when the same situation arises again (this is similar to the procedure behind route flap damping).

It should be understood that the supervisory module is only able to route traffic from overloaded segments to segments which have are under-loaded and that are performing better than had been predicted. If there are no under-loaded segments then re-routing traffic will only re-route overload conditions between different network segments. If the supervisory module permits data to be rerouted on a frequent basis then this may cause an alarm to be generated as it may indicate that the network is nearing its capacity and that the autonomous fixes provided by the supervisory module are no longer sufficient to address the problem.

If a network has a large number of segments then it may not be possible for all of the segment management modules to be overseen by a single supervisory management module. In such a scenario the communications network may comprise a plurality of supervisory management modules 320 each of which are responsible for communications with a subset of the segment management modules 300. Each of the supervisory management modules 320 are then connected to a top level supervisory management module. The network operates as described above. If a request for a re-routing of traffic from one network segment to another segment is made, then this request will be made to the appropriate supervisory management module. That supervisory management module will attempt to adjust the QoS parameters for the overloaded segment based on the other segments that it is supervising which may be performing better than had been previously predicted. It will be understood that this hierarchical arrangement of supervisory modules may comprise more than two levels of supervisory modules.

Whilst the segment and supervisory management modules discussed above with reference to Figures 1 and 2 can manage many of the network congestion issues that can arise in such communications networks. However, there will still be some problems that they cannot solve. For example, consider a communications network that is used to video on-demand and linear TV. Regulatory reasons may prevent content from being pre-cached in an optimal fashion, so even if a network operator knows, or can predict, that a particular popular piece of content will be required in certain parts of the network at certain times it cannot provision the content into the content caches until the content has been requested by users. This can lead to inefficient caching strategies and oscillating caches (that is, where content is repeatedly removed and then re-cached) resulting in increased network traffic, which may lead to extra cost or breaches of SLAs.

The global network management module 400 can access information from a number of different sources (see below) which allow it make predictions as to the demands that will be placed on the network such that the network can be configured so that the predicted traffic can then be routed in an efficient number, so that the number of interventions required from the segment and supervisory management modules is reduced.

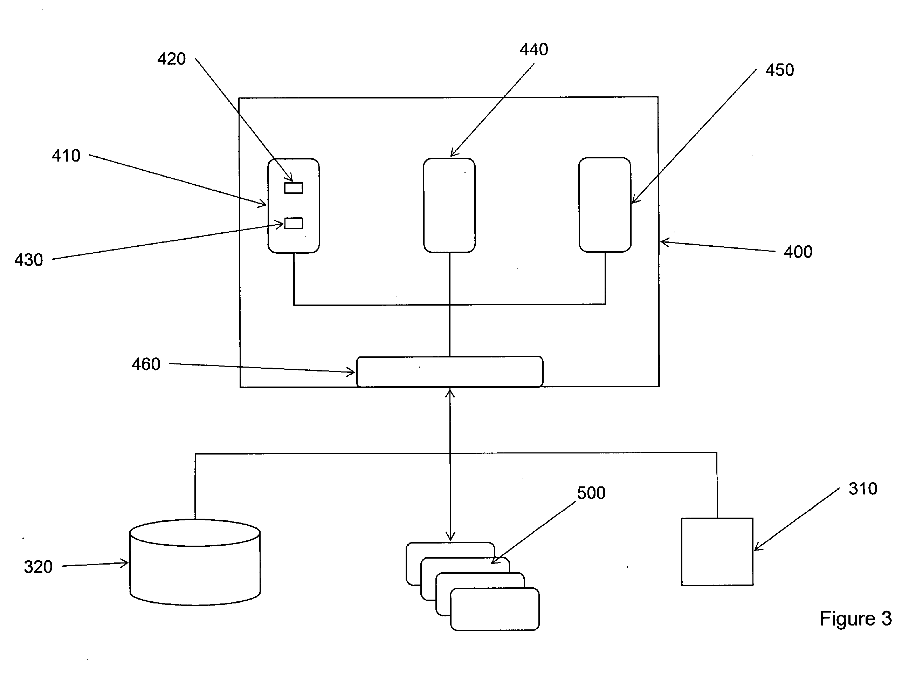

Figure 3 shows a schematic depiction of the global management module 400 which comprises non-volatile data storage means 410, such as a hard disk drive or non-volatile memory modules, the non-volatile data storage means storing one or more software applications 420 for performing the above functions, operating system 430, volatile data storage means 440, such as RAM modules, and a central processor unit (CPU) 450. The non-volatile data storage means, volatile data storage means and the CPU are interconnected and are also in communication with the network interface 460. In operation, the operating system and one or more of the software applications will be loaded into the volatile data storage means and are executed by the CPU. If data is to be transmitted to, or received from, the network segment then it will be routed via the network interface. It will be understood that the management module is effectively a general purpose computing device which incorporates the one or more software applications 520 that are required to provide the functionality of the present invention. The global management module is in communication with the supervisory management module 320 and the network management database via the network interface 460. The global management module is furthermore in communication with a plurality of information sources 500 which are used in predicted the traffic which may be routed via the communications network 100.

It will be understood that the information which is used as a basis for traffic prediction may be selected a wide range of information sources. These may include, but are not limited to, one or more of the following:

- analysis of social networking sites - for example, if a person recommends a television show to a friend then there is an increased likelihood that the friend will watch the show. If a celebrity uses a micro-blogging service, such as Twitter, to make such a recommendation then this may cause many thousands of people to watch a show. These trends are likely to become more significant as more televisions are capable of connecting to the internet and catch-up services such as the BBC iPlayer are used more frequently

- customer subscription information - for example if a customer has signed up for a sports package and has a history of watching football matches, then it is likely that they will watch major matches, such as the Champions League or the World Cup as well

- major service outage information - if a given part of the network is scheduled to be decommissioned at a specified time then it will not be available to transfer data

- TV programme recommendations engines - users viewing habits can be analysed to determine the genres of programmes that a user prefers, the times of data that a user is likely to watch TV at, etc. in order to provide a prediction of whether a particular user will be watching at a given time, enabling the likely demand across the network to be predicted

- historical network performance data - if a segment is likely to fail under heavy loading then it may not be used to carry certain services. For example, an assured service would not be routed over a segment that is likely to fail, to avoid data from being lost and re-transmission of the data being necessary, whereas traffic that can tolerate packet loss could still be routed via those segments. More specifically, if a segment is predicted to be congested then traffic that is inelastic to delay would not sent through this segment, but other types of traffic which are delay tolerant could be.

- information from multicast nodes - this may include the identity of the users which have signed up to a multicast node and are thus likely to access content within a relatively short period of time, along with historical data, for example relating to the frequency of use and other user behaviour.

It will be understood that not all of the plurality of information sources will be accessed all of the time and that the global management module may decide to only access a subset of the available information sources to predict the traffic for a particular service, or services. The timescales of prediction can vary from a few minutes, for example when a programme which is about to be transmitted is recommended on a social networking site, to an action which can be predicted days, or weeks, in advance such as the televising of a scheduled foot ball match.

In order to produce a prediction a predictive model would have been trained on historic data. There would be different types of models for different types of services in order to accommodate the different types of available attributes describing features of the services. For example, for a TV programme there would be attributes describing the type of programme (football, racing, cricket, other sports event, family show, US soap, ...), viewing statistics, duration, time of day, day of week, presence of competing event in schedule, etc. The model would predict demand for the service. Typically, the attributes describing the service would be a mixture of numerical and non-numerical values. Modelling techniques like regression trees, neural networks or Bayesian networks can cope with this type of attribute mix (see T Mitchell, "Machine Learning", McGraw-Hill Science/Engineering/Math, 1st edition, 1997). A regression tree can use the non-numeric attributes to induce a tree structure and then use the numerical attribute to compute a linear regression model to predict traffic parameters. A neural network, typically, would use a binary encoding for non-numerical attributes, where the presence of an attribute value would be encoded as a '1' in one input unit of the network. Bayesian networks would use binning to turn numerical attributes into intervals which can be represented non-numerically and then operate only with non-numerical attributes.

Based on the data received from the plurality of sources, it is possible to predict the traffic that the network is likely to receive. These predictions will include not just the volume of traffic but variations in the traffic levels over time, the volume of traffic associated with different service types, etc. The traffic predictions can then be used to provision the network in anticipation of the arrival of the predicted traffic. As it is likely that several different types of on-demand content will be pushed to customers at around the same time (as most content is likely to be consumed in the peak hours of the evening), then if the different content streams are all assigned the same level of priority, then conventional approaches, such as Differentiated Services, will no longer provide a 'transparent' network to the higher priority classes of service. This is then likely to lead to SLAs being breached.

Assuming that the following information is available from the TV schedule: 'At 20:00 tonight, Sky Sports 1 broadcasts the scheduled Arsenal vs. Manchester City match'. Assuming further that a predictive model for these types of TV events exists and that the predicted demand meets the required thresholds (see below). Using the predicted demand (for example, number of viewers) in combination with the SLA for the service the expected network load can be determined.

The global management module will now attempt to provision this predicted increase in traffic. This provisioning should occur without sacrificing the QoS thresholds that are applicable to the services being carried by the network prior to the provisioning efforts. The provisioning is undertaken in accordance with:

- the traffic that has been predicted to arrive.

- the SLA requirements for each of the service types that are predicted to arrive. For example, in the present example where the content provider is providing a broadcast of a live event, the provisioning must be maintained for the entire duration of the broadcast (which may be extended beyond the originally scheduled duration, for example in the case of extra time). If the content provider is providing, for example, an episode of a pre-recorded programme then it may be possible for the content provider to transmit the content to the network operator in advance such that capacity can provisioned in the network in order to minimise the time taken to deliver the content.

- performance reports for the network elements and network loading data, which will be reported by each of the segment management modules. This data will be held by the supervisory management module and/or the network management database.

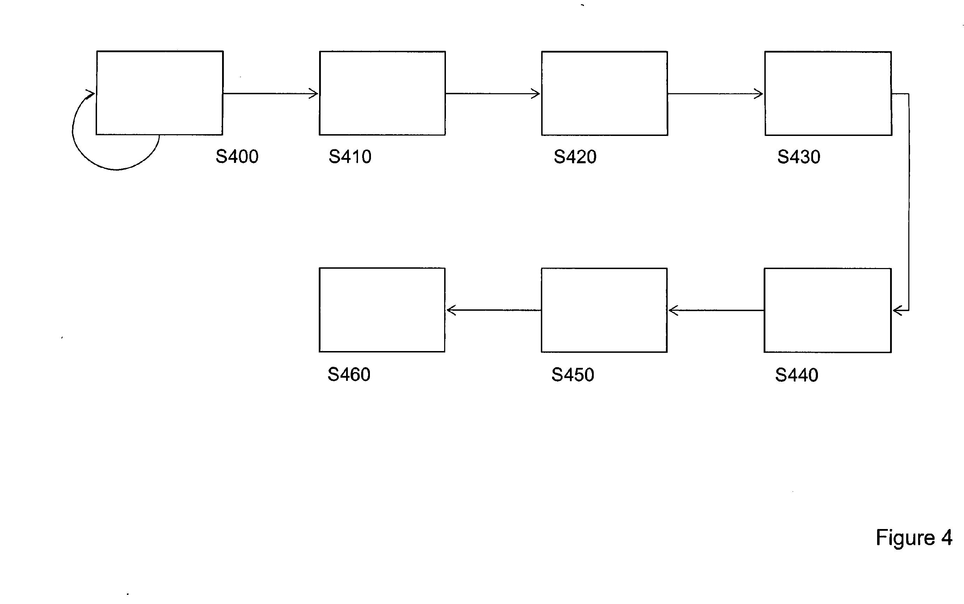

Figure 4 shows a flowchart which provides a graphical depiction of a method according to the present invention. At step S400 the global network management module 400 will make a decision whether to act upon a prediction that has been generated, based on information received from the plurality of information sources.

The global module will decide not to act upon the prediction, if

i) the likelihood of such an event occurring is below a first threshold value;
ii) the demand placed on the network by the predicted event occurring is below a second threshold value; or
iii) the impact of the predicted event, based on both the likelihood of the event occurring and the concomitant demand placed on the network, is below a third threshold value.

If the global module decides to take no action then no action will be taken to reconfigure the network in response to that prediction. If the predicted event does then subsequently occur, then the network management techniques outlined above, with reference to the segment management modules and the supervisory management modules, and conventional bandwidth brokers will be used to manage the incoming data flows.

In the present example, it is safe to assume that the televised football match will be broadcast at the specified time. Thus, the global management module will decide to take action based on the prediction and will thus configure the communications network in order to be able to accept the predicted traffic. Thus, at 1950 (or some other predetermined period of time prior to the predicted event) the global management module will optimise the existing flows across the networks by re-arranging a plurality of network flows so that they occupy fewer pipes within the network so that there is a subset of the network free at 2000 to carry the predicted network load (Alternatively, the optimisation strategy may involve existing network flows being re-distributed across the network such that the communications links in the network are approximately equally loaded and so that the predicted load can be evenly distributed across the existing available links. The choice of optimisation strategy has no effect on the implementation of a method according to the present invention as described below).

At step S410 the global management module will analyse the loading on each of the plurality of communications links to determine which data flows being carried over the network might be re-allocated to different communications links. For the purpose of the following discussion, the optimisation strategy is to move traffic from lightly loaded links to more heavily loaded links such that the predicted traffic can be carried over network links that are sparsely loaded, or even unloaded. At stage S420 the global management module will identify the next best hop(s) for the information flows identified in S410 to their respective destination. This data can be obtained by polling the OSPF routing table of the router that precedes each of the communications link which might be freed up. At stage S430 the global management module will initiate QoS negotiations for the proposed next hops to determine their current capability and whether they are able to transmit sufficient quantities of data whilst maintaining the required QoS thresholds. Alternatively, these QoS negotiations can be done by any existing management module. At stage S440, decisions are made to re-route those data flows for which there is a next hop which can carry the data flow with the required QoS. If a proposed next hop is only able to carry a percentage of a data flow, for example 2Mb/s of a 4Mb/s data flow then this percentage can be transferred to a first next best hop and the remainder of the data flow can be transferred to one or more further next best hops. This splitting of a data flow can be implemented by, for example, changing the weighting factors of the multipath routing scheduling algorithms that are used by the network routers (see, for example, C Villamizar, *"OSPF Optimized Multipath (OSPF-OMP)",* Internet-Draft, IETF http://tools.ietf.org/html/draft-ietf-ospf-omp-02). The re-routing of network flows can be performed based on all of the QoS parameters in use, or based on a subset of these parameters. Once the decisions to re-route the data flows have been made, then the re-routing can be implemented at stage S450 by changing the MPLS labelling accordingly for each of the data flows. It will be noted that this re-routing of the data flows follows the same principles described above in relation to the operation of the network segment management module.

Finally, at step S460, a class of service will be assigned to the data flow that is predicted to arrive, based on the demand expected and the SLAs that relate to the predicted data flow. This information will then be signalled to the bandwidth broker function that resides in the edge of the network. When the predicted data flow arrives, the bandwidth broker function will execute this decision by assigning the incoming data flow with the relevant class of service and performing admission control to the network on other services having a lower priority for the duration of the predicted event. This change can be made using the ToS/DSCP field of the IP header.

Whilst the global management module will configure the network to reserve capacity for a predicted event it will not intervene to re-configure the network in the event that the predicted event does not occur or does not require the amount of network resources that were originally envisaged. If reserved capacity is being underutilised, or is not being used after the expiry of a predicted event, and this is causing problems congestion elsewhere in the network then a supervisory management module may raise an alarm or raise a request to the network operator to allow some of the reserved capacity to be released or to be used for incoming traffic to the network.

The present invention provides a communications network comprising a plurality of routers and a plurality of communications links which interconnect the routers and a global network management module. The global network management module is in communication with a number of diverse information sources, such as television listings, social networking sites, user preferences, historical data relating to the accessing of content, etc. such that the global network management module can make a prediction as to the likelihood that a particular network traffic event will occur and the demands that such a traffic event will place on the network. If the global network management module decides that the traffic event will occur then it will pre-configure the communications network such that the traffic generated by the event can be carried across the network within pre-defined quality thresholds and without unnecessarily effecting other traffic being carried on the network.

It will be understood that some aspects of the present invention, for example the global network management module, may be implemented by executing computer code on a general purpose computing apparatus. It should be understood that the structure of the general purpose computing apparatus is not critical as long as it is capable of executing the computer code which performs a method according to the present invention. Such computer code may be deployed to such a general purpose computing apparatus via download, for example via the internet, or on some physical media, for example, DVD, CD-ROM, USB memory stick, etc.

## Claims

1. A communications network comprising a plurality of routers; a plurality of communications links, the communications links interconnecting each of the plurality of routers to one or more other routers; a network management database, the network management database storing operational data regarding each of the plurality of routers; and a global network management module, the global network management module being in communication with the network management database and with a plurality of information sources wherein, in operation, the global network management module:

   a) analyses information received from one or more of the plurality of information sources;
   b) determines the probability that a traffic event will occur, based on the information received in step a);
   c) reconfigures the communications network if it decides that the traffic event will occur, the network reconfiguration occurring before the occurrence of the traffic event.

2. A communications network according to Claim 1, wherein the global network management module reconfigures the communications network in accordance with the characteristics of the traffic that will be generated by the traffic event.

3. A communications network according to Claim 1 or Claim 2, wherein the global network management module reconfigures the communications network in accordance quality of service measures that relate to the traffic that will be generated by the traffic event.

4. A communications network according to any of Claims 1 to 3, wherein the reconfiguration of the communications network comprises re-routing existing network traffic to other communications links in order to leave one or more communications links that are substantially unloaded in order to be able to carry the traffic that will be generated by the traffic event.

5. A communications network according to any of Claims 1 to 3, wherein the reconfiguration of the communications network comprises re-routing existing network traffic to other communications links such that the traffic carried by each of the plurality of communications links is substantially equal.

6. A communications network according to any preceding Claim, wherein the communications network further comprises a plurality of segments, each network segment comprising one or more routers, one or more communications links and a network segment management module.

**7.** A communications network according to Claim 6, wherein the communications network further comprises one or more supervisory management modules, wherein each of the network segment management module is uniquely associated with one of the supervisory management modules.

**8.** A method of operating a communications network, wherein the communications network comprises: a plurality of routers; a plurality of communications links, the communications links interconnecting each of the plurality of routers to one or more other routers; a network management database, the network management database storing operational data regarding each of the plurality of routers; and a global network management module, the global network management module being in communication with the network management database and with a plurality of information sources, the method comprising the steps of

i) the global network management module analysing information received from one or more of the plurality of information sources;
ii) the global network management determining the probability that a traffic event will occur, based on the information received in step i); and
iii) the global network management module reconfiguring the communications network if it decides that the traffic event will occur, the network reconfiguration occurring before the occurrence of the traffic event.

**9.** A data carrier device comprising computer executable code for performing a method according to Claim 8.

Figure 1

EP 2 469 757 A1

300

210

220

200

230

Figure 2

EP 2 469 757 A1

13

Figure 3

Figure 4

Europäisches
Patentamt

European
Patent Office

Office européen
des brevets

## EUROPEAN SEARCH REPORT

Application Number

EP 10 25 2223

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/112855 A1 (BRITISH TELECOMM [GB]; KINGS NICHOLAS JOHN [GB]; DAVIES NICHOLAS JOHN) 7 October 2010 (2010-10-07) * abstract * * claims 1-4 * * page 3, line 12 - line 24 * * page 3, line 31 - line 33 * * page 4, line 8 - line 27 * * page 4, line 33 - line 34 * * figure 8 * * page 14, line 20 - line 27 * ----- | 1-9 | INV. H04L12/24 |
| A | WO 2007/048738 A1 (IBM [US]; IBM UK [GB]; GARBOW ZACHARY ADAM [US]) 3 May 2007 (2007-05-03) * abstract * * page 9, line 2 - line 6 * * page 9, line 20 - line 23 * * claims 1,8 * * figure 10 * * page 15, column 30 - page 16, column 6 * ----- | 1-9 | |
| A | EP 1 351 441 A2 (AT & T CORP [US]) 8 October 2003 (2003-10-08) * abstract * * claims 1,2 * * paragraph [0049] * * paragraph [0034] * ----- | 1-9 | TECHNICAL FIELDS SEARCHED (IPC) H04L |
| A | WO 02/45315 A2 (MICROMUSE INC [US]) 6 June 2002 (2002-06-06) * abstract * * claims 1,4-10 * * page 20, line 18 - line 25 * * claims 48,53,61 * ----- | 1-9 | |

The present search report has been drawn up for all claims

| Place of search | Date of completion of the search | Examiner |
|---|---|---|
| Munich | 4 October 2011 | Bub, Armin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 10 25 2223

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2011

| Patent document cited in search report | | Publication date | Patent family member(s) | | Publication date |
|---|---|---|---|---|---|
| WO 2010112855 | A1 | 07-10-2010 | NONE | | |
| WO 2007048738 | A1 | 03-05-2007 | US | 2007101202 A1 | 03-05-2007 |
| | | | US | 2009132864 A1 | 21-05-2009 |
| EP 1351441 | A2 | 08-10-2003 | CA | 2419675 A1 | 02-09-2003 |
| | | | JP | 2003258871 A | 12-09-2003 |
| | | | US | 2003179703 A1 | 25-09-2003 |
| WO 0245315 | A2 | 06-06-2002 | AU | 1666002 A | 11-06-2002 |
| | | | DE | 10196984 T1 | 13-11-2003 |
| | | | GB | 2387066 A | 01-10-2003 |
| | | | US | 2008189225 A1 | 07-08-2008 |
| | | | US | 2008215355 A1 | 04-09-2008 |
| | | | US | 7383191 B1 | 03-06-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 10250540 A

**Non-patent literature cited in the description**

- Machine Learning. **T MITCHELL.** Science/Engineering/Math. McGraw-Hill, 1997
- **T MITCHELL.** Machine Learning. McGraw-Hill Science/Engineering/Math, 1997